# EUROPÄISCHE PATENTSCHRIFT

(11) **EP 2 404 768 B1**
(45) Veröffentlichungstag und Bekanntmachung des Hinweises auf die Patenterteilung: **17.12.2014**
(21) Anmeldenummer: 11165625.2
(22) Anmeldetag: 11.05.2011
(51) Int. Cl.: B60C 11/01, B60C 11/04, B60C 11/03

(54) **Fahrzeugluftreifen**
Pneumatic tyres for a vehicle
Pneus de véhicule

(30) Priorität: 05.07.2010 DE 102010017743
(43) Veröffentlichungstag der Anmeldung: 11.01.2012
(73) Patentinhaber: Continental Reifen Deutschland GmbH, 30165 Hannover (DE)
(72) Erfinder: Fischer, Markus, 30823 Garbsen (DE); Behr, Ulrich, 30169 Hannover (DE); Heide, Thorsten, 31275 Lehrte (DE)
(74) Vertreter: Finger, Karsten

(56) Entgegenhaltungen:
- EP-A1- 2 332 748
- EP-A1- 2 338 701
- EP-A1- 2 338 702
- WO-A1-2011/024492
- DE-A1-102009 026 047

## Beschreibung

Die Erfindung betrifft einen Fahrzeugluftreifen mit einem Laufstreifenprofil mit wenigstens einer innerhalb der Bodenaufstandsbreite T_{A} durch eine Umfangsrille in axialer Richtung A begrenzten Schulterblockreihe aus in Umfangsrichtung hintereinander angeordneten und durch erste Querrillen jeweils voneinander beabstandeten Profilblockelementen, die sich in axialer Richtung A des Fahrzeugluftreifens ausgehend von der Umfangsrille bis in eine Position außerhalb der Bodenaufstandsbreite T_{A} erstrecken und dort enden.

Derartige Fahrzeugluftreifen sind bekannt. Die Profilblockelemente der Schulterprofilblockreihen sollen dabei in Umfangsrichtung und in Querrichtung besonders steif ausgebildet sein, um gute Traktions-, Brems- und Handlingeigenschaften zu ermöglichen. Gleichzeitig sollen Querrillen es ermöglichen, zur Vermeidung von Aquaplaning Wasser aus dem Bereich der Bodenaufstandsfläche des Laufstreifenprofils seitlich abzuführen. Zur Erzielung guter Traktions- und Handlingeigenschaften werden daher Profilblockelemente der Schulterprofilblockreihen in Umfangsrichtung häufig möglichst groß ausgebildet, wodurch ausreichend Umfang- und Quersteifigkeit der Profilblockelemente gegeben ist für gute Traktionseigenschaften auf nasser Straße sowie zur Erzielung guter Handlingeigenschaften. Hierdurch wird jedoch die Zahl der Querrillen und somit die Abflussmöglichkeit des Wassers sowie die Zahl der im Schulterbereich wirkenden Querkanten reduziert, wodurch Aquaplaningeigenschaften sowie Nassgriff negativ beeinflusst werden. Es ist bekannt stattdessen sehr kurze Profilblockelemente und hierdurch deutlich mehr Querrillen in der Schulterprofilblockreihe eines Laufstreifenprofils auszubilden, wodurch die Abflussmöglichkeit für Wasser erhöht, die Zahl der durch die Querrillen gebildeten Griffkanten erhöht und auf diese Weise Aquaplaningeigenschaften und Nassgriff verbessert werden. Die Profilblockelemente der Schulterprofilblockreihe werden jedoch auf diese Weise mit reduzierter Umfangssteifigkeit ausgebildet, wodurch Traktionseigenschaften auf trockener Straße sowie Handlingeigenschaften negativ beeinflusst werden können.

Darüber hinaus ist sowohl bei den herkömmlichen Fahrzeugluftreifen mit hoher Anzahl von Profilblockelementen der Schulterprofilblockreihe als auch bei den bekannten Fahrzeugluftreifen mit reduzierter Anzahl der Profilblockelemente in den Schulterprofilblockreihen nur eine eingeschränkte Traktionsfähigkeit auf weichem Untergrund - wie beispielsweise Matsch oder Schnee - gegeben. Es ist bekannt, durch zusätzliche Maßnahmen wie z.B. spezielle Rillenverläufe oder Feineinschnitte innerhalb der Bodenaufstandsfläche den Griff in weichem Untergrund - wie z. B. in Matsch oder Schnee - zu verbessern. Die konstruktiven Möglichkeiten derartiger Ausbildungen sind jedoch dadurch beschränkt, dass die Feineinschnitte üblicherweise die Steifigkeit der Profilblockelemente negativ beeinflussen, was sich nachteilig auf Traktions- oder Bremseigenschaften auf trockener Fahrbahn sowie auf Handlingeigenschaften auswirken kann. Die Ausbildung mit Rillen besonderer konstruktiver Rillengestaltungen zur Schaffung zusätzlicher Kanten beeinflussen den Ablauf des Wassers und können hierdurch das Aquaplaningverhalten negativ beeinflussen.

Der Erfindung liegt daher die Aufgabe zugrunde, einen derartigen Fahrzeugluftreifen zu schaffen, bei dem in einfacher Weise die Schulterprofilblockreihe sowohl hohe Steifigkeit der Profilblockelemente mit ausreichend wirksamen Ablaufkanälen zur Ableitung von Wasser als auch wirksame Griffkanten zum Griff in Matsch und Schnee und somit gute Traktions- und Bremseigenschaften auf trockener Straße bei guten Handlingeigenschaften, gutem Aquaplaningverhalten und verbessertem Griff auf weichem Untergrund ermöglicht wird.

Erfindungsgemäß wird die Aufgabe durch die Ausbildung eines Fahrzeugluftreifens mit einem Laufstreifenprofil mit wenigstens einer innerhalb der Bodenaufstandsbreite T_{A} durch eine Umfangsrille in axialer Richtung A begrenzten Schulterblockreihe aus in Umfangsrichtung hintereinander angeordneten und durch erste Querrillen jeweils voneinander beabstandeten Profilblockelementen, die sich in axialer Richtung A des Fahrzeugluftreifens ausgehend von der Umfangsrille bis in eine Position außerhalb der Bodenaufstandsbreite T_{A} erstrecken und dort enden, gemäß den Merkmalen von Anspruch 1 gelöst, bei dem zwischen zwei ersten Querrillen im Erstreckungsbereich des von den ersten Querrillen begrenzten Profilblockelementes in Umfangsrichtung U von einander beabstandet wenigstens drei weitere Querrillen ausgebildet sind, die sich im Profilblockelement in axialer Richtung A ausgehend von der Umfangsrille bis in eine Position außerhalb der Bodenaufstandsbreite T_{A} erstrecken und dort im Profilblockelement - insbesondere stumpf - enden, bei dem im Profilblockelement außerhalb der Bodenaufstandsfläche eine U-förmige Vertiefung ausgebildet ist, deren Tiefe t kleiner ist als die Tiefe der weiteren Querrillen, wobei die beiden Schenkel der U-Form breiter als die weiteren Querrillen und parallel zu den weiteren Querrillen verlaufend ausgebildet sind und die beiden in Umfangsrichtung U außen im Profilblockelement angeordneten Querrillen sich jeweils in einen Schenkel hineinerstrecken, so dass der Schenkel jeweils im gemeinsamen axialen Erstreckungsbereich mit der Querrille die Querrille in Umfangsrichtung U zu beiden Seiten hin umgibt, wobei die Verbindung der beiden Schenkel der U-förmigen Vertiefung einen im Wesentlichen in Umfangsrichtung U verlaufenden Verbindungskanal bildet, der im Profilblockelement axial außerhalb und ohne Berührkontakt zu der in Umfangsrichtung U mittleren der drei weiteren Querrillen angeordnet ist.

Auf diese Weise werden durch die zwischen den Profilblockelementen gebildeten ersten Querrillen sowie durch die im Profilblockelement gebildeten weiteren Querrillen eine Vielzahl von wirksamen Ablaufkanälen zur Ableitung von Wasser aus der Umfangsrille bis in den Bereich außerhalb der Bodenaufstandsfläche geschaffen, wobei jedes der Profilblockelemente über den gesamten Umfangserstreckungsbereich des Profilblockelementes axial außerhalb der weiteren Umfangsrillen eine hohe Umfangssteifigkeit erhält. Die U-förmigen Vertiefungen bewirken außerhalb der Bodenaufstandsfläche zusätzliche Griffkanten, welche bei weichem Untergrund ihre Wirkung entfalten und bei normalem Untergrund keinen negativen Einfluss auf das Reifenverhalten innerhalb der Bodenaufstandsfläche entfaltet. Die beiden Schenkel der Vertiefung sowie der Verbindungskanal bewirken einen großen Negativanteil des Profils im Bereich außerhalb der Bodenaufstandsfläche, wodurch im weichen Untergrund eine zusätzliche Aufnahme von Wasser, Matsch bzw. Schnee in größerem Umfang möglich ist. Der Verbindungskanal bildet lange Griffkanten in Umfangsrichtung des Fahrzeugluftreifens, wodurch Nasshandling sowie das Querbeschleunigungsverhalten des Fahrzeugluftreifens zusätzlich über die Lebensdauer des Fahrzeugluftreifens hinweg positiv beeinflusst werden können. Die Vertiefung und die durch sie gebildeten Griffkanten liegen soweit außerhalb der Bodenaufstandsfläche, dass sie - anders als Griffkanten im Bereich der Bodenaufstandsfläche - kaum Einfluss auf die Geräuschbildung des Reifens entfalten und die Bodenkontaktfläche des Reifens beim Trockenbremsen nicht reduzieren. Die Querrillen in den Profilblockelementen ermöglichen trotz hoher Steifigkeit des Profilblockelementes noch ausreichend Flexibilität im Bereich der Bodenaufstandsfläche für ein gewünschtes Abplattverhalten des Reifens beim Durchlaufen der Bodenaufstandsfläche. Dies wirkt sich ebenfalls positiv auf die Wasserableitung aus. Der Verbindungskanal ermöglicht neben den zusätzlichen Griffkanten in Umfangsrichtung eine Kopplung der beiden Schenkel der U-förmigen Vertiefung, wodurch die Einlagerung von Wasser im Bereich der Schenkel vermieden und die Entstehung von Micro-Aquaplaning-Effekten, die durch feine Wasserpolster in Form von Wasserfilmen entstehen können, hierdurch zusätzlich verhindert werden können.

Besonders vorteilhaft ist die Ausbildung eines Fahrzeugluftreifens gemäß den Merkmalen von Anspruch 2, wobei die Breite des Verbindungskanals kleiner als die Breite der Schenkel ist. Hierdurch kann in einfacher Weise sichergestellt werden, dass alle durch die Schenkel erzeugten Querkanten ausreichend groß ausgebildet sind um eine größtmögliche Traktionsfähigkeit zu erzeugen unter Sicherstellung der koppelnde Wirkung des Verbindungskanals und langer wirksamer Griffkanten in Umfangsrichtung..

Besonders vorteilhaft ist die Ausbildung eines Fahrzeugluftreifens gemäß den Merkmalen von Anspruch 3, wobei die Breite a eines Schenkels mit ((dₐ/4) + (dᵢ/4)+ (e/2)) ≤ a ≤ ((dₐ/2) + (dᵢ/2)+ e) ausgebildet ist, wobei dₐ den in

Umfangsrichtung gemessenen Abstand zwischen der vom Schenkel teilumschlossenen weiteren Querrille und der nächstgelegenen ersten, das Profilblockelement begrenzenden Querrille bildet, wobei dᵢ den in Umfangsrichtung gemessenen Abstand zwischen der vom Schenkel teilumschlossenen weiteren Querrille und der mittleren weiteren Querrille bildet und wobei e die Breite der vom Schenkel teilumschlossenen weiteren Querrille bildet. Dieser Bereich der Breitenausbildung hat sich als besonders vorteilhaft erwiesen weil er bei ausreichend hoher Stabilität der nicht vertieften Bereiche ausreichend hohes negatives Volumen für die angestrebte Traktionsfähigkeit erzeugt.

Besonders vorteilhaft zur Erzielung einer größtmöglichen Traktionsfähigkeit ist die Ausbildung eines Fahrzeugluftreifens gemäß den Merkmalen von Anspruch 4, wobei die beiden in Umfangsrichtung außen im Profilblockelement angeordneten Querillen sich jeweils in Umfangrichtung U gesehen in mittiger Position des jeweiligen Schenkels in den Schenkel hineinerstrecken. Hierdurch sind in Umfangsrichtung vor und hinter den außen angeordneten Querrillen jeweils für Traktionsfähigkeit ausreichend große Schenkelbereiche ausgebildet.

Die Erfindung wird im Folgenden an Hand der in den Figuren 1 bis 8 dargestellten Ausführungsbeispiele näher erläutert. Hierin zeigen
- Fig. 1: einen Ausschnitt eines Laufstreifenprofils in Draufsicht,
- Fig. 2: das Laufstreifenprofil von Fig.1 in Schnittdarstellung gemäß Schnitt II-II von Fig.1,
- Fig. 3: das Laufstreifenprofil von Fig.2 in Schnittdarstellung gemäß Schnitt III-III von Fig.1,
- Fig. 4: das Laufstreifenprofil von Fig.1 in Schnittdarstellung gemäß Schnitt IV-IV von Fig.1,
- Fig. 5: das Laufstreifenprofil von Fig.1 in Schnittdarstellung gemäß Schnitt V-V von Fig.1,
- Fig. 6: das Laufstreifenprofil von Fig.1 in Schnittdarstellung gemäß Schnitt VI-VI von Fig.1,
- Fig. 7: das Laufstreifenprofil von Fig.1 in Schnittdarstellung gemäß Schnitt VII-VII von Fig.1 und
- Fig. 8: ein Profilblockelement von Fig.1 in perspektivischer Darstellung.

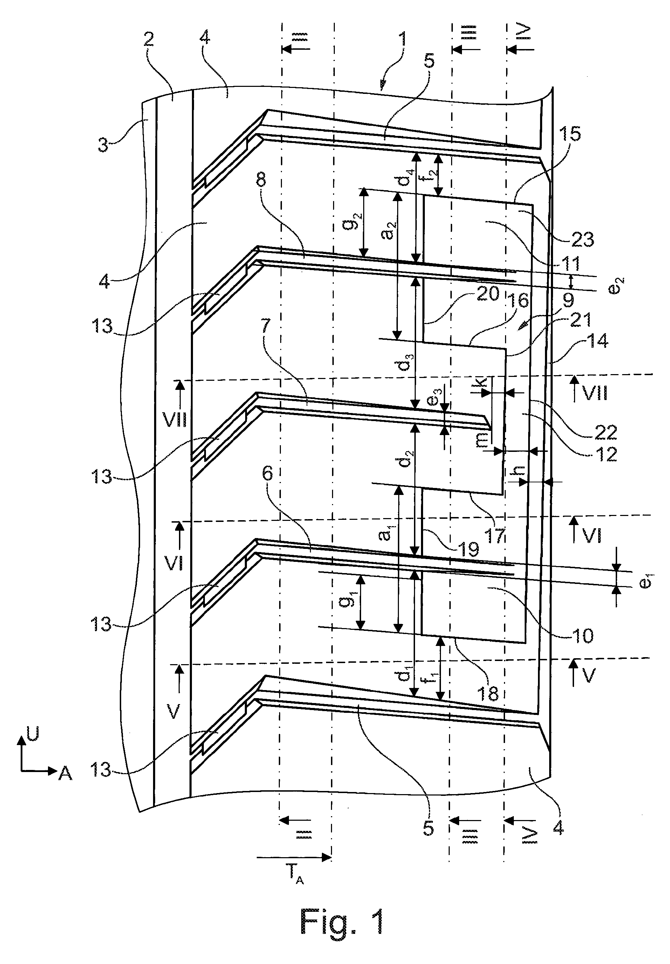

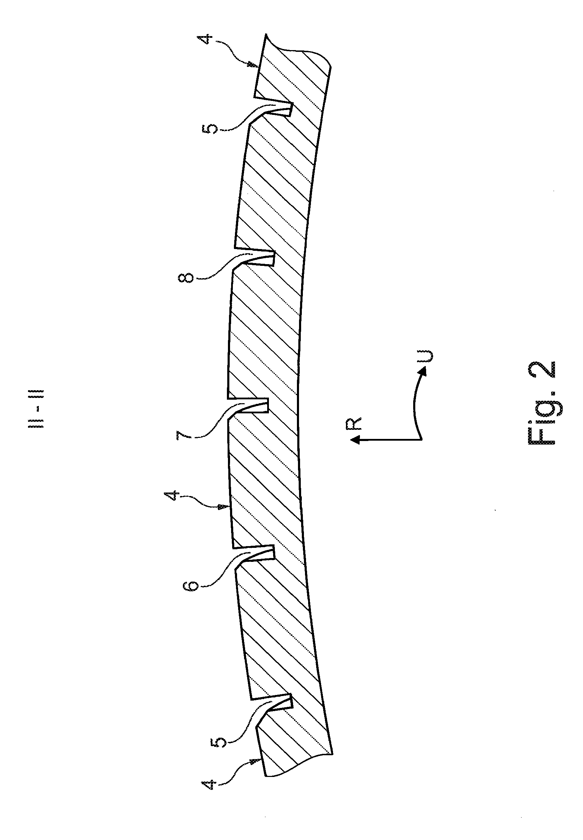

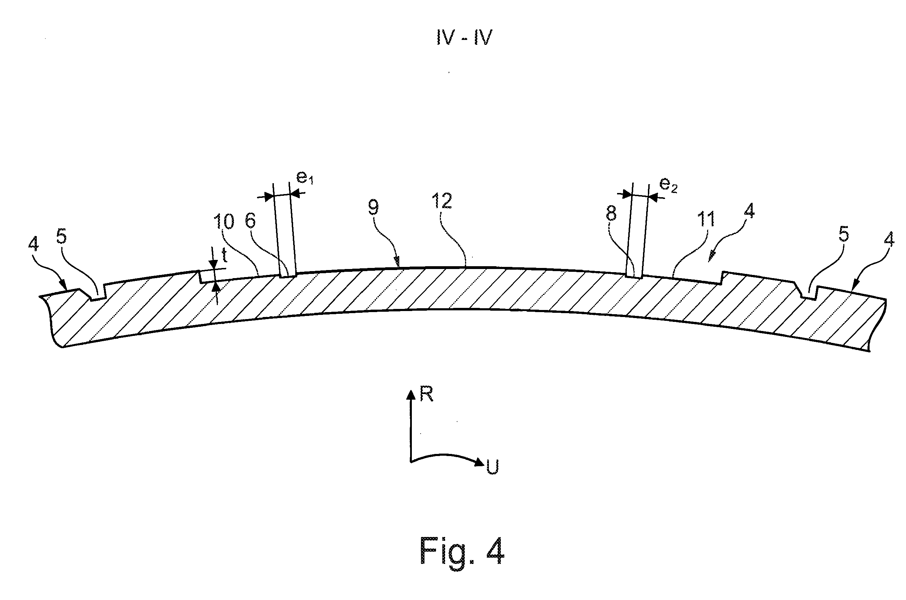

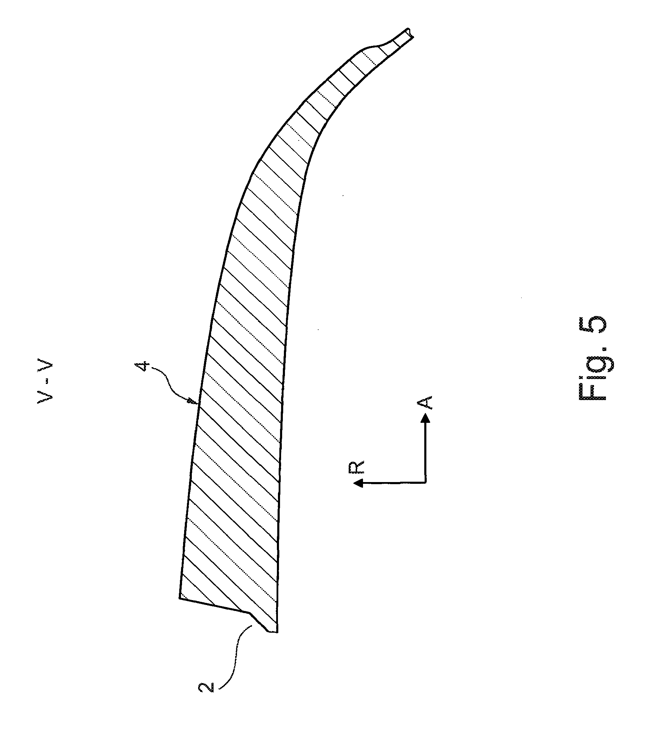

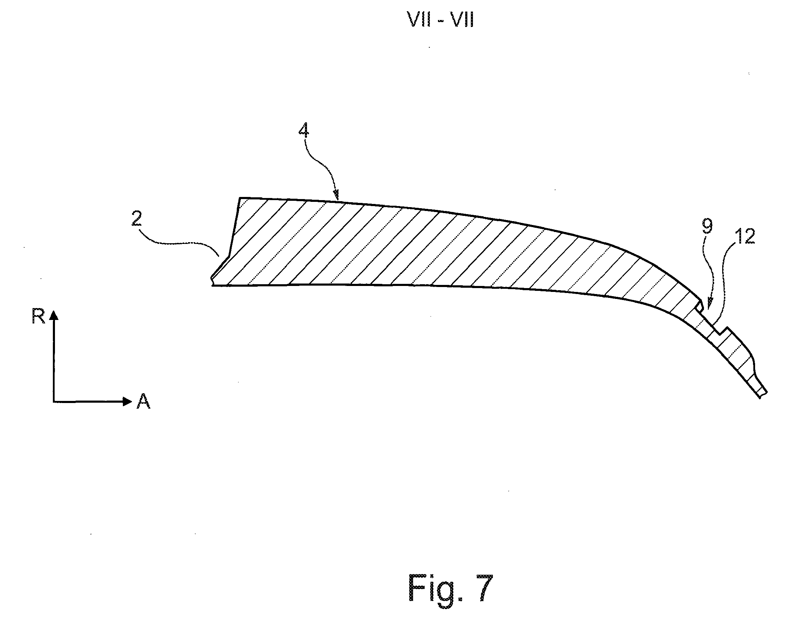

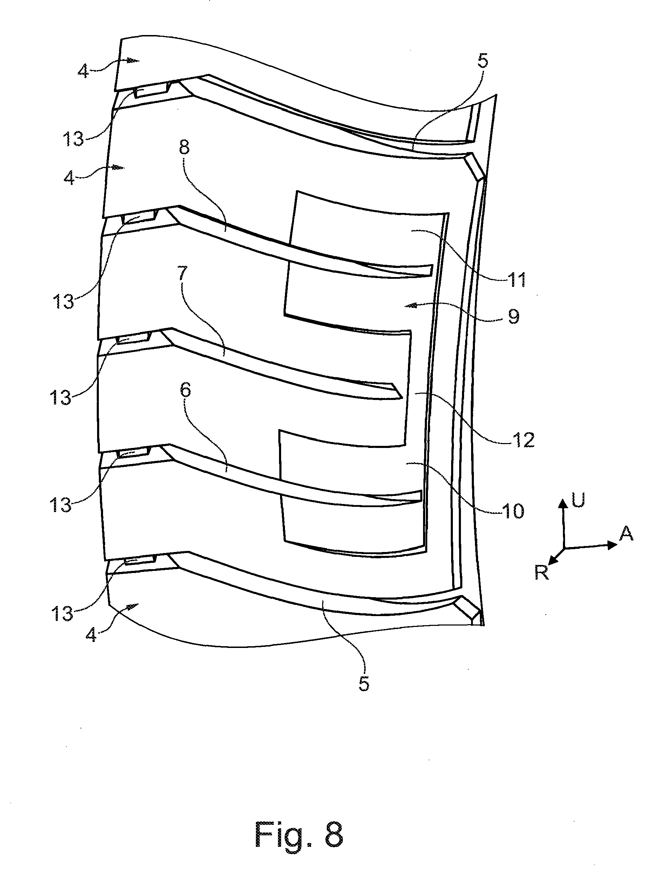

Die Figuren 1 bis 8 zeigen einen Ausschnitt eines Laufstreifenprofils für PKW-Fahrzeuge mit Off-Road-Eigenschaften mit einer Schulterprofilblockreihe 1, welche in Umfangsrichtung U ausgerichtet und über den gesamten Umfang des Fahrzeugluftreifens erstreckt ausgebildet ist, mit einer in Umfangsrichtung U ausgerichteten über den gesamten Umfang des Fahrzeugluftreifens erstreckt ausgebildeten Umfangsrille 2 und mit einem Profilband 3, welches ebenfalls in Umfangsrichtung U ausgerichtet und über den gesamten Umfang des Fahrzeugluftreifens erstreckt ausgebildet ist. Das Profilband 3 ist beispielsweise eine Profilrippe bekannter Art. Die Umfangsrille 2 trennt in axialer Richtung A des Fahrzeugluftreifens das Profilband 3 von der Schulterprofilblockreihe 1.

Die Schulterprofilblockreihe 1 erstreckt sich in axialer Richtung A ausgehend von der Umfangsrille 2 innerhalb der Bodenaufstandsbreite T_{A} (Breite der Bodenaufstandsfläche) nach außen und weiter bis in den axialen Erstreckungsbereich des Laufstreifenprofils axial außerhalb der Bodenausstandsbreite T_{A} hinaus und ist in Umfangsrichtung U aus mehreren über den Umfang des Fahrzeugluftreifens verteilten, hintereinander angeordneten und jeweils durch eine Querrille 5 voneinander beabstandeten Profilblockelementen 4 ausgebildet. Die Querrillen 5 erstrecken sich ausgehend von der Umfangsrille 2 in einem ersten axialen Erstreckungsbereich in axialer Richtung A nach außen mit einer konstanten Richtungskomponente in Umfangsrichtung U bis zu einer Knickstelle. Von der Knickstelle aus erstrecken sich die Querrillen 5 weiter in axialer Richtung A nach außen ebenfalls mit einer konstanten Richtungskomponente in Umfangsrichtung U. Die Richtungskomponente in Umfangsrichtung U ist in diesem zweiten Erstreckungsabschnitt kleiner gewählt als die Richtungskomponente in Umfangsrichtung U im ersten Erstreckungsabschnitt. Die Neigungsrichtung und somit die Umfangsorientierung der Querrille 5 ist im zweiten Abschnitt entgegen gerichtet zur Neigungsrichtung und somit zur Umfangsorientierung der Querrille 5 im ersten Abschnitt ausgebildet ist. Die Querrillen 5 erstrecken sich dabei mit ihrem zweiten axialen Erstreckungsabschnitt jeweils von einer Position innerhalb der Bodenaufstandsbreite T_{A} axial nach außen bis außerhalb der Bodenaufstandsbreite T_{A} und auch im Erstreckungsbereich der Schulterprofilblockreihe 1 außerhalb der Bodenaufstandsbreite T_{A} durch die gesamte Schulterprofilblockreihe 1 hindurch. Die Profilblockelemente 4 sind in axialer Richtung A zur Reifenseitenwand hin durch eine Profilblockelementflanke 14 begrenzt, welche im Wesentlichen in Umfangsrichtung U geradlinig verläuft. Im dargestellten Ausführungsbeispiel ist die Profilblockelementflanke 14 mit einem geringen Neigungswinkel von 1° ° bis 2° zur Umfangsrichtung U verlaufend ausgebildet.

In jedem Profilblockelement 4 sind jeweils in Umfangsrichtung U hintereinander angeordnet drei parallele Querrillen 6, 7 und 8 ausgebildet, welche jeweils im Wesentlichen parallel zu den Querrillen 5 verlaufen und sich ausgehend von der Umfangsrille 2 nach axial außen durch das Profilblockelement 4 hindurch bis in eine Position außerhalb der Bodenaufstandsbreite T_{A} hinaus erstrecken und dort im Profilblockelement 4 mit Abstand zur Profilblockelementflanke 14 enden. Die in Umfangsrichtung mittlere Querrille 7 der drei Querrillen 6,7,8 erstreckt sich dabei nicht ganz soweit axial nach außen wie die beiden äußeren Querrillen 6 und 8. Die Querrille 6 ist mit einer Breite e₁, die Querrille 7 mit Breite e₃ und die Querrille 8 mit einer Breite e₂ ausgebildet, wobei die Breiten e₁, e₂ und e₃ jeweils in der das Profilblockelement 4 nach radial außen hin begrenzenden Reifenoberfläche in Umfangsrichtung U des Fahrzeugluftreifens gemessen werden. Die Breiten e₁, e₂ und e₃ der Querrillen 6,8 und 7 nehmen in axialer Richtung A von der Knickstelle ausgehend nach außen hin jeweils konstant ab.

Die Querrillen 5, 6, 7 und 8 werden nach radial innen jeweils durch ihren Rillengrund begrenzt. Die Querrillen 5, 6, 7 und 8 sind mit einer Tiefe ausgebildet, die jeweils die radiale Erstreckung zwischen der die Profilblockreihe nach radial außen begrenzende Mantelfläche und dem Rillengrund angibt. Die Tiefe nimmt außerhalb der Bodenaufstandsbreite T_{A} im axialen der Erstreckungsbereich der Querrillen 5, 6, 7 und 8 jeweils in Richtung nach außen zur Flanke 14 hin stetig ab.

Im Profilblockelement 4 ist im axialen Erstreckungsbereich außerhalb der Bodenaufstandsbreite T_{A} jeweils eine U-förmige Vertiefung 9 ausgebildet mit einem ersten Schenkel 10, mit einem zweiten Schenkel 11 und mit einem die beiden Schenkel 10 und 11 verbindenden Verbindungskanal 12. Die U-förmige Vertiefung 9 ist nach radial innen durch einen Vertiefungsgrund 23 begrenzt. Der erste Schenkel 10 ist in Umfangsrichtung U zu der vom zweiten Schenkel 11 wegweisenden Seite hin durch eine Wand 18 und zu der zum zweiten Schenkel 11 hinweisenden Seite hin durch eine Wand 17 sowie in axialer Richtung A zur Umfangsrille 2 hin durch eine Wand 19 begrenzt. Der zweite Schenkel 11 ist in Umfangsrichtung U zu der vom ersten Schenkel 10 wegweisenden Seite hin durch eine Wand 15 und zu der zum ersten Schenkel 10 hinweisenden Seite hin durch eine Wand 16 sowie in axialer Richtung A zur Umfangsrille 2 hin durch eine Wand 20 begrenzt.

Die beiden Schenkel 10 und 11 werden durch einen Verbindungskanal 12 miteinander verbunden, welche in axialer Richtung zur Umfangsrille 2 hin durch eine Wand 21 begrenzt wird. Der Verbindungskanal 12 sowie die Schenkel 10 und 11 werden in axialer Richtung zur Reifenseitenwand hin durch eine Wand 22 begrenzt. Die Wände 22, 21, 20 und 19 sind jeweils parallel zueinander und zur Flanke 14 geradlinig verlaufend ausgerichtet. Die Wände 15, 16, 17 und 18 sind jeweils parallel zueinander geradlinig ausgerichtet. Die Wände 15, 16, 17 und 18 sind in ihrem axialen Erstreckungsbereich parallel zu den Querrillen 6, 7 und 8 sowie zu den Querrillen 5 ausgerichtet. Die Wand 15 ist in Umfangsrichtung U im Abstand f₂ von der zur Wand 15 nächstliegenden Querrille 5, die Wand 18 im Abstand f₁ von der zur Wand 18 nächstliegenden Querrille 5 ausgebildet. Die Wände 17 und 18 sind im Abstand a₁ in Umfangsrichtung U voneinander beabstandet ausgebildet, welcher die Breite des ersten Schenkels 10 angibt. Die Wände 15 und 16 sind in Umfangsrichtung U gesehen im Abstand a₂ voneinander ausgebildet, welche die Breite des zweiten Schenkels 11 angibt. Die Breite a₁ des Schenkels 10 ist mit ((d₁ / 4) + (d₂ /4 ) + (e₁ / 2)) ≤ a₁ ≤ ((d₁ / 2) + (d₂ / 2) + e₁) und die Breite a₂ des zweiten Schenkels 11 ist mit ((d₄ / 4) + (d₃ / 4) + (e₂ / 2)) ≤ a₂ ≤ ((d₄ / 2) + (d₃ / 2) + e₂) ausgebildet.

Beispielsweise ist a₁ = ((d₁ / 2) + (d₂ / 2) + e₁) und a₂ = ((d₄ / 2) + (d₃ / 2) + e₂) ausgebildet.

Die Abstände f₁ und f₂ sind mit 5 mm ≤ f₁ und mit 5 mm ≤ f₂ ausgebildet.

Die Wand 18 ist in Umfangsrichtung U im Abstand g₁ von der Querrille 6, die Wand 15 im Abstand g₂ von der Querrille 8 ausgebildet. Der Abstand g₁ ist mit 2 mm ≤ g₁ ≤ (d₁ - 5mm) und der Abstand g₂ ist mit 2 mm ≤ g₂ ≤ (d₂ - 5 mm) ausgebildet. Der Abstand m der Wände 21 und 22 voneinander und somit die Breite des Verbindungskanals 12 ist mit m ≥ 2 mm, beispielsweise mit m = 5 mm ausgebildet. Der Abstand n zwischen der Wand 22 der Vertiefung 9 und der Flanke 14 des Profilblockelementes 4 ist mit n ≥ 2 mm, beispielsweise mit n = 5 mm ausgebildet. Der Abstand n gibt damit die Breite des verbleibenden zwischen Wand 22 und der Flanke 14 ausgebildeten stegartigen Profilblockelementabschnittes des Profilblockelementes 4 an, welcher sich in radialer Richtung R bis zu der radial nach außen die Profilblockreihe 1 begrenzenden Oberfläche, welche Teil der Mantelfläche des Laufstreifenprofiles ist, erstreckt.

Die mittlere Querrille 7 endet in axialer Richtung A im Abstand k von der Wand 21 des Verbindungskanals 12 mit k ≥ 2 mm, beispielsweise mit k = 3 mm. Die Querrille 6 erstreckt sich im Abstand g₁ von der Wand 18 parallel zur Wand 18 in den Schenkel 10 hinein und endet noch innerhalb der Vertiefung 9 in axialer Richtung A in einem Abstand von der Wand 22, welcher kleiner ist als der Abstand m der Wände 22 und 21 voneinander. Ebenso erstreckt sich die Querrille 8 im Abstand g₂ von der Wand 15 parallel zur Wand 15 in die in den zweiten Schenkel 11 hinein und endet noch innerhalb der Vertiefung 9 in axialer Richtung A in einem Abstand von der Wand 22, welcher kleiner ist als der Abstand m der Wände 22 und 21 voneinander.

Im dargestellten Ausführungsbeispiel endet die Querrille 6 und die Querrille 8 im gleichen Abstand von der Wand 22. Im dargestellten Ausführungsbeispiel verläuft die Querrille 6 im axialen Erstreckungsbereich der Wände 17 und 18 mittig zwischen den Wänden 17 und 18 und die Querrille 8 im axialen Erstreckungsbereich der Wände 15 und 16 mittig zwischen den Wänden 15 und 16. Im dargestellten Ausführungsbeispiel verläuft die Querrille 7 im axialen Erstreckungsbereich der Vertiefung 9 mittig zwischen den Wänden 16 und 17.

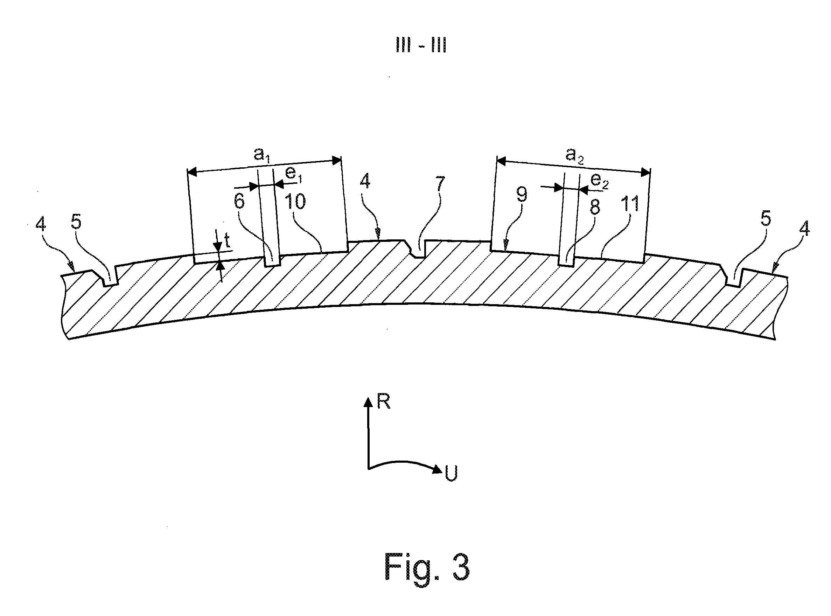

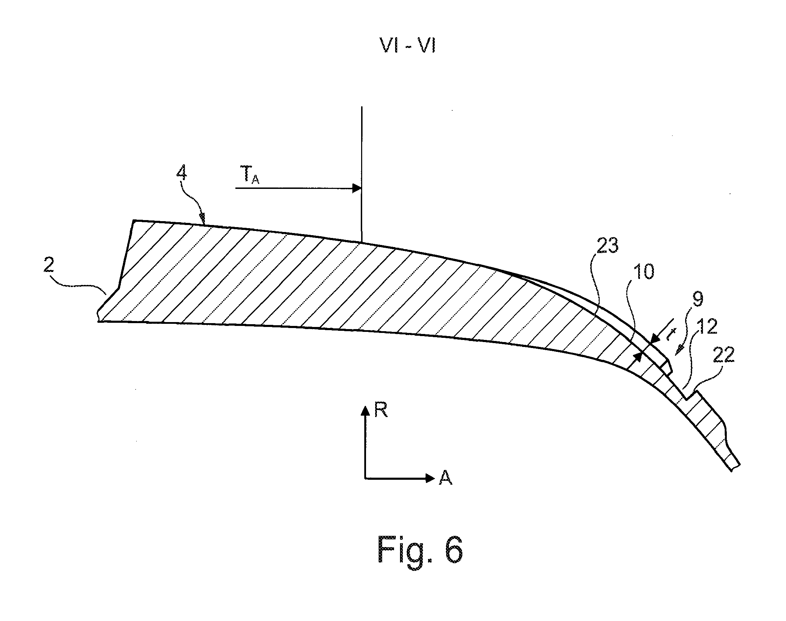

Im dargestellten Ausführungsbeispiel ist d₁ = d₂ gewählt. Die Vertiefung 9 ist mit einer Tiefe t ausgebildet, welche in jeder axialen Position der Vertiefung 9 jeweils den Abstand zwischen der die Profilblockreihe 1 nach radial außen begrenzenden Mantelfläche und dem Vertiefungsgrund 10 angibt. Wie in Figur 6 aber auch in den Figuren 3, 4 und 5 zu erkennen ist, nimmt die Tiefe t der Vertiefung 9 in jeder Umfangsposition der Vertiefung U längs der gesamten axialen Erstreckung der Vertiefung 9 ausgehend von der Wand 19 bzw. der Wand 20 bzw. der Wand 21 in Richtung Wand 22 hin stetig zu, so dass sie ihren tiefsten Punkt an der Schnittstelle zwischen Vertiefungsgrund 23 und Wand 22 aufweist. Die größte Tiefe t im tiefsten Punkt der Vertiefung ist dabei mit 0,5 mm ≤ t ≤ 2 mm gewählt. Die dargestellten Ausführungsbeispiel ist die größte Tiefe t = 1 mm. Die Tiefe t der Vertiefung 9 ist dabei in jeder axialen Position jeweils kleiner ausgebildet als die in der jeweiligen axialen Position ausgebildete Tiefe der Querrillen 5, 6, 7 und 8.

Die Tiefen der Querrillen 5, 6, 7 und 8 nimmt außerhalb der axialen Breite T_{A} der Bodenaufstandsfläche stetig ab. Das Minimum der Tiefe der Querrillen 5, 6, 7 und 8 im Bereich der Profilblockreihe 2 ist deutlich größer gewählt als das Maximum der Tiefe t der Vertiefung 9. Das Minimum der Tiefe der Querrillen 5, 6, 7 und 8 ist mit 0,5mm ausgebildet.

Fig.1 zeigt ein weiteres Ausführungsbeispiel, bei dem in den Querrillen 5, 6, 7 und 8 im ersten Erstreckungsbereich der Querrillen 5,6,7 bzw. 8 zwischen Umfangsrille 2 und Knickstelle jeweils stegförmige Erhöhungen 13 im Rillengrund ausgebildet sind, die sich in Umfangsrichtung U durch die Querrille 5 bzw. 6 bzw. 7 bzw. 8 hindurch erstrecken und eine zusätzliche Versteifung in Umfangsrichtung bewirken.

### (Teil der Beschreibung)

- 1: Schulterprofilblockreihe
- 2: Umfangsrille
- 3: Profilband
- 4: Profilblockelement
- 5: Querrille
- 6: Querrille
- 7: Querrille
- 8: Querrille
- 9: U-förmige Vertiefung
- 10: Schenkel
- 11: Schenkel
- 12: Verbindungskanal
- 13: Steg
- 14: Flanke
- 15: Wand
- 16: Wand
- 17: Wand
- 18: Wand
- 19: Wand
- 20: Wand
- 21: Wand
- 22: Wand
- 23: Vertiefungsgrund

## Patentansprüche

1. Fahrzeugluftreifen mit einem Laufstreifenprofil mit wenigstens einer innerhalb der Bodenaufstandsbreite T_{A} durch eine Umfangsrille (2) in axialer Richtung A begrenzten Schulterblockreihe (1) aus in Umfangsrichtung U hintereinander angeordneten und durch erste Querrillen (5) jeweils voneinander beabstandeten Profilblockelementen (4), die sich in axialer Richtung A des Fahrzeugluftreifens ausgehend von der Umfangsrille (2) bis in eine Position außerhalb der Bodenaufstandsbreite T_{A} erstrecken und dort enden,
**dadurch gekennzeichnet,**
**dass** zwischen zwei ersten Querrillen (5) im Erstreckungsbereich des von den ersten Querrillen (5) begrenzten Profilblockelementes (4) in Umfangsrichtung U von einander beabstandet wenigstens drei weitere Querrillen (6,7,8) ausgebildet sind, die sich im Profilblockelement (4) in axialer Richtung A ausgehend von der Umfangsrille (2) bis in eine Position außerhalb der Bodenaufstandsbreite T_{A} erstrecken und dort im Profilblockelement (4) - insbesondere stumpf - enden, dass im Profilblockelement (4) außerhalb der Bodenaufstandsfläche eine U-förmige Vertiefung (9) ausgebildet ist, deren Tiefe t kleiner ist als die Tiefe der weiteren Querrillen (6,7,8), wobei die beiden Schenkel (10,11) der U-Form breiter als die weiteren Querrillen (6,7,8) und parallel zu den weiteren Querrillen (6,7,8) verlaufend ausgebildet sind und die beiden in Umfangsrichtung U außen im Profilblockelement (4) angeordneten Querrillen (6,8) sich jeweils in einen Schenkel (10,11) hineinerstrecken, so dass der Schenkel (10,11) jeweils im gemeinsamen axialen Erstreckungsbereich mit der Querrille (6,8) die Querrille (6,8) in Umfangsrichtung U zu beiden Seiten hin umgibt,
wobei die Verbindung der beiden Schenkel (10,11) der U-förmigen Vertiefung (9) einen im Wesentlichen in Umfangsrichtung U verlaufenden Verbindungskanal (12) bildet, der im Profilblockelement (4) axial außerhalb und ohne Berührkontakt zu der in Umfangsrichtung U mittleren (7) der drei weiteren Querrillen (6,7,8) angeordnet ist.

2. Fahrzeugluftreifen gemäß den Merkmalen von Anspruch 1,
wobei die Breite m des Verbindungskanals (12) kleiner als die Breite (a₁,a₂) der Schenkel (10,11) ist.

3. Fahrzeugluftreifen gemäß den Merkmalen von Anspruch 1 oder 2,
wobei die Breite a eines Schenkels (10,11) mit
((dₐ/4) + (dᵢ/4)+ (e/2)) ≤ a ≤ ((dₐ/2) + (dᵢ/2)+ e) ausgebildet ist, wobei dₐ den in Umfangsrichtung U gemessenen Abstand zwischen der vom Schenkel (10,11) teilumschlossenen weiteren Querrille (6,8) und der nächstgelegenen ersten, das Profilblockelement (4) begrenzenden Querrille (5) bildet, wobei dᵢ den in Umfangsrichtung U gemessenen Abstand zwischen der vom Schenkel (10,11) teilumschlossenen weiteren Querrille (6,8) und der mittleren weiteren Querrille (7) bildet und wobei e die Breite der vom Schenkel (10,11) teilumschlossenen weiteren Querrille (6,8) bildet.

4. Fahrzeugluftreifen gemäß den Merkmalen von einem oder mehreren der vorangegangenen Ansprüche,
wobei die beiden in Umfangsrichtung (U) außen im Profilblockelement (4) angeordneten Querillen (6,8) sich jeweils in Umfangrichtung U gesehen in mittiger Position des jeweiligen Schenkels (10,11) in den Schenkel (10,11) hineinerstrecken.

## Claims

1. Pneumatic vehicle tyre with a tread profile with at least one row of shoulder blocks (1), which is bounded in the axial direction A within the ground contact width T_{A} by a circumferential groove (2) and comprises profile block elements (4), which are arranged one behind the other in the circumferential direction U and are respectively spaced apart from one another by first transverse grooves (5), and which extend in the axial direction A of the pneumatic vehicle tyre from the circumferential groove (2) into a position outside the ground contact width T_{A} and end there,
**characterized**
**in that**, between two first transverse grooves (5), there are formed spaced apart from one another in the circumferential direction U in the region of extent of the profile block element (4) that is bounded by the first transverse grooves (5) at least three further transverse grooves (6, 7, 8), which extend in the axial direction A in the profile block element (4) from the circumferential groove (2) into a position outside the ground contact width T_{A} and end there - in particular with a butt face - in the profile block element (4),
**in that** in the profile block element (4) there is formed outside the ground contact area a U-shaped depression (9), the depth of which t is less than the depth of the further transverse grooves (6, 7, 8), the two legs (10, 11) of the U-shape being wider than the further transverse grooves (6, 7, 8) and being formed running parallel to the further transverse grooves (6, 7, 8), and the two transverse grooves (6, 8) that are arranged in the profile block element (4) on the outside in the circumferential direction U respectively extend into a leg (10, 11), so that, in the common axial region of extent with the transverse groove (6, 8), the leg (10, 11) respectively surrounds the transverse groove (6, 8) on both sides in the circumferential direction U,
the connection of the two legs (10, 11) of the U-shaped depression (9) forming a connecting channel (12), which runs substantially in the circumferential direction U and is arranged in the profile block element (4) axially outside and without physical contact with the middle one (7), in the circumferential direction U, of the three further transverse grooves (6, 7, 8).

2. Pneumatic vehicle tyre according to the features of Claim 1,
the width m of the connecting channel (12) being less than the width (a₁, a₂) of the legs (10, 11).

3. Pneumatic vehicle tyre according to the features of Claim 1 or 2,
the width a of a leg (10, 11) being formed with ((dₐ/4) + (dᵢ/4) + (e/2)) ≤ a ≤ ((dₐ/2) + (dᵢ/2) + e), where dₐ forms the distance, measured in the circumferential direction U, between the further transverse groove (6, 8) that is partly enclosed by the leg (10, 11) and the nearest first transverse groove (5) bounding the profile block element (4), where dᵢ forms the distance, measured in the circumferential direction U, between the further transverse groove (6, 8) that is partly enclosed by the leg (10, 11) and the middle further transverse groove (7) and where e forms the width of the further transverse groove (6, 8) that is partly enclosed by the leg (10, 11).

4. Pneumatic vehicle tyre according to the features of one or more of the preceding claims,
the two transverse grooves (6, 8) that are arranged in the profile block element (4) on the outside in the circumferential direction (U) respectively extending into the leg (10, 11) in the middle position of the respective leg (10, 11), as seen in the circumferential direction U.

## Revendications

1. Pneumatique de véhicule comprenant un profil de bande de roulement avec au moins une rangée de blocs d'épaulement (1) limitée dans la direction axiale A par une rainure périphérique (2) à l'intérieur de la largeur d'appui au sol T_{A}, constituée d'éléments de bloc profilé (4) disposés les uns derrière les autres dans la direction périphérique U et espacés les uns des autres à chaque fois par des premières rainures transversales (5), lesquels éléments de bloc profilé s'étendent dans la direction axiale A du pneumatique de véhicule depuis la rainure périphérique (2) jusque dans une position à l'extérieur de la largeur d'appui au sol T_{A} où ils se terminent,
**caractérisé**
**en ce qu'**entre deux premières rainures transversales (5) dans la région d'étendue de l'élément de bloc profilé (4) limité par les premières rainures transversales (5) sont réalisées au moins trois autres rainures transversales (6, 7, 8) espacées les unes des autres dans la direction périphérique U, lesquelles s'étendent dans l'élément de bloc profilé (4) dans la direction axiale A depuis la rainure périphérique (2) jusque dans une position à l'extérieur de la largeur d'appui au sol T_{A} où elles se terminent dans l'élément de bloc profilé (4) - notamment bout à bout,
**en ce que** dans l'élément de bloc profilé (4) à l'extérieur de la surface d'appui au sol est réalisé un renfoncement en forme de U (9) dont la profondeur t est inférieure à la profondeur des autres rainures transversales (6, 7, 8), les deux branches (10, 11) de la forme en U étant plus larges que les autres rainures transversales (6, 7, 8) et étant réalisées de manière à s'étendre parallèlement aux autres rainures transversales (6, 7, 8) et les deux rainures transversales (6, 8) disposées dans la direction périphérique U à l'extérieur dans l'élément de bloc profilé (4) s'étendant à chaque fois dans une branche (10, 11), de telle sorte que la branche (10, 11) entoure la rainure transversale (6, 8) dans la direction périphérique U des deux côtés à chaque fois dans une région d'étendue axiale commune avec la rainure transversale (6, 8),
la liaison des deux branches (10, 11) du renfoncement en forme de U (9) formant un canal de liaison (12) s'étendant essentiellement dans la direction périphérique U, lequel est disposé dans l'élément de bloc profilé (4) axialement à l'extérieur et sans contact avec la rainure centrale (7) des trois autres rainures transversales (6, 7, 8) dans la direction périphérique U.

2. Pneumatique de véhicule selon les caractéristiques de la revendication 1,
dans lequel la largeur m du canal de liaison (12) est inférieure à la largeur (a₁, a₂) des branches (10, 11) .

3. Pneumatique de véhicule selon les caractéristiques des revendications 1 ou 2,
dans lequel la largeur a d'une branche (10, 11) est réalisée avec
((dₐ/4)+(dᵢ/4)+(e/2)) ≤ a ≤ ( (_{da}/2)+(dᵢ/2)+ e), dₐ formant la distance mesurée dans la direction périphérique U entre l'autre rainure transversale (6, 8) partiellement entourée par la branche (10, 11) et la première rainure transversale (5) la plus proche, limitant l'élément de bloc profilé (4), dᵢ formant la distance mesurée dans la direction périphérique U entre l'autre rainure transversale (6, 8) partiellement entourée par la branche (10, 11) et l'autre rainure transversale centrale (7) et e formant la largeur de l'autre rainure transversale (6, 8) partiellement entourée par la branche (10, 11).

4. Pneumatique de véhicule selon les caractéristiques d'une ou plusieurs des revendications précédentes, dans lequel les deux rainures transversales (6, 8) disposées dans la direction périphérique U à l'extérieur dans l'élément de bloc profilé (4) s'étendent à chaque fois vu dans la direction périphérique U dans la branche (10, 11), dans la position centrale de la branche respective (10, 11) .
